# EUROPEAN PATENT SPECIFICATION

(11) **EP 2 708 316 B1**
(45) Date of publication and mention of the grant of the patent: **10.09.2014**
(21) Application number: 12380046.8
(22) Date of filing: 13.09.2012
(51) Int. Cl.: B23Q 11/00, B23Q 17/09, F16F 7/10, F16F 15/03

(54) **Inertia damper for suppressing vibrations in a machine tool**
Trägheitsdämpfer zur Unterdrückung von Vibrationen in einer Werkzeugmaschine
Amortisseur d'inertie pour supprimer les vibrations dans une machine outil

(43) Date of publication of application: 19.03.2014
(73) Proprietor: Ideko, S. Coop, 20870 Elgoibar Guipuzcoa (ES)
(72) Inventor: Muñoa Gorostidi, Jokin, 20870 Elgoibar (Guipuzcoa) (ES); Aguirre Rejado, Gorka, 20870 Elgoibar (Guipuzcoa) (ES); Gorostiaga Altuna, Mikel, 20870 Elgoibar (Guipuzcoa) (ES)
(74) Representative: Cabinet Plasseraud

(56) References cited:
- WO-A1-03/022516
- US-A1- 2003 127 295
- US-A1- 2007 051 576

## Description

The present invention relates to suppressing or attenuating the vibrations produced in machine tools during machining processes, such as for example turning, milling, boring or grinding, a tuneable inertia damper which is coupled to the machine tool for modifying the dynamics of one of its specific vibration modes being proposed to that end.

### State of the Art

One of the main problems related to machining processes, such as turning, milling, boring and grinding, is the phenomenon known as regenerative chatter.

Regenerative chatter is a self-excited vibration characteristic of cutting processes wherein the cutting-edge of the tool must pass over a surface which has previously been machined. When the tool goes to machine an area of the part it does not leave a smooth surface, rather a wavy surface is created due to the vibration of the machine. Therefore, when a previously machined area is machined, the tool finds a variable surface created in the prior pass, which affects the theoretical chip thickness. This thickness is also altered by the vibration which the tool experiences at the time of cutting. Therefore, the vibration which it currently has and that which the machine has had in the prior period affect the theoretical chip thickness, and thereby the cutting force, since this is proportional to chip thickness. A loop is generated in which the cutting force is a function of the current and prior vibration of the machine. For certain cutting conditions, this loop unstably increases the vibration amplitude and the cutting force, creating large vibrations called chatter, generally affecting the machine, the part and the tool.

Inertial dampers, which are dynamic absorbers consisting of a movable mass which is suspended from the structure to dampen by means of an elastic element providing stiffness and capacity to dissipate energy, such that the movable mass arranged inside the damper vibrates transmitting an inertial force to the machine reducing the amplitude of the mechanical vibrations produced in the machine tool are used for suppressing unwanted vibrations in machining operations and especially for suppressing chatter. However, it is known that vibration dampers must precisely tune their stiffness and damping to the natural frequency of the structure to dampen to function efficiently.

There are different types of dampers for eliminating vibrations produced in machine tools during machining, passive dampers, semi-active dampers and active dampers being distinguished. Passive dampers have a fixed stiffness and damping which cannot be varied during the machining process, so their performance is reduced if the vibration frequency of the structure to dampen varies during said machining process due to variations in the cutting position or mass reductions related to the cutting process.

Semi-active dampers have controlled stiffness and damping, the damper must be tuned close to the vibration frequency of the structure to dampen. In this case the adjustment is performed manually by the operator before machining.

Active dampers replace the stiffness and damping operating principle with a controlled actuator which allows generating arbitrary forces at any time, thus optimising energy dissipation. These active dampers are therefore more effective than passive dampers and semi-active dampers but, however, their solution is more expensive, complex and less robust.

A tuneable inertia damper which can automatically and continuously adapt its stiffness and damping during the machining process, also detecting whether chatter and the optimal tuning frequency are being produced during the process to thus ensure optimal operation at all times is therefore necessary. US-2007/0051576 discloses an inertia damper according to the preamble of claim 1.

### Object of the Invention

According to the present invention, a tuneable inertia damper for suppressing vibrations in a machine tool is proposed which allows independently controlling the stiffness and the damping, for adapting to the vibration frequency of the structure to dampen during the machining process, such that high precision machining both in dimensions and in surface finish is achieved. The main objective is to improve productivity since when the stability of the cutting process increases greater pass depths, and therefore removing material more quickly, are allowed. The second advantage is greater precision.

The present invention allows independently adjusting both the stiffness and the damping of the passive damper as a result of an elastic element with adjustable stiffness and the use of eddy currents. The invention is defined in claim 1.

The inertia damper for suppressing vibrations in a machine tool according to the invention comprises an outer casing which is fixed to the structure of the machine tool to dampen, a suspended inertial mass which must be tuned based on the vibration frequency of the structure of the machine tool to dampen being arranged inside said outer casing.

An elastic element with adjustable stiffness which is rotated by a motor associated with an encoder is arranged inside the inertial mass, the stiffness of the inertial mass being controlled by means of varying the angular position of the shaft of the motor rotating the elastic element. Pairs of magnets generating a magnetic field variable in space are arranged associated with the inertial mass. Electricity conducting plates fixed to the outer casing and having no mechanical contact with the magnets are arranged in the gap available between the pairs of magnets. The relative movement between the magnetic field generated by the magnets and the conducting plates generates a braking or damping force due to the losses associated with eddy currents. Likewise, a first accelerometer is arranged coupled to the inertial mass and a second accelerometer is arranged coupled to the outer casing which is fixed to the structure to dampen.

In a possible practical embodiment, it has been envisaged that the elastic element with adjustable stiffness which is arranged inside the inertial mass is an H-shaped spring, with two transverse walls of different thickness for varying the stiffness. In another possible embodiment, it has been envisaged that the elastic element is a cantilever beam which varies the position of the supporting point of the beam by means of a ball screw operated by the motor for varying the stiffness. In any case, the independent control of the stiffness of the inertia damper is achieved by varying the angular position of the shaft of the motor operating the elastic element, knowing at all times the angular position of the shaft of the motor by means of the readings given by the encoder which is associated with it.

Two possible embodiments have been envisaged for independently controlling the damping of the inertia damper: according to one embodiment, the magnets associated with the inertial mass have displacement means for moving transversely with respect to plates and thus varying the magnetic field which is established between them; and according to another embodiment, each magnet is formed by a set of contiguous plates, the set of plates being formed by a first steel plate, a second steel plate including an electric winding and a third magnetised plate which is arranged parallel to the metal plate, such that the magnetic field is varied by varying the electric current flowing through the winding.

The device allows calculating optimal stiffness and damping values during the machining process and adjusting them with the motor and windings, assuring optimal tuning at all times. This device is capable of varying its tuning as the natural frequencies of the system and the conditions vary in the working field.

Three working modes can be distinguished, depending on whether an equivalent modal mass calculation is used and whether the variation of the dynamic parameters throughout the working field (dynamic model) is known:
- Tuning with equivalent modal mass calculation and with unknown dynamic model: the signals of the two accelerometers are compared, the equivalent mass and the ratio between the equivalent mass and the movable mass of the damper are obtained. The information of the accelerometer mounted in the fixed part is used for continuously detecting the main frequency at which the machine is vibrating during the machining process, and also detecting whether this vibration corresponds to a case of chatter. Considering that the chatter frequency is equal to the natural frequency, the optimal stiffness and damping parameters of the actuator are obtained taking into account the optimal Den Hartog and Simms parameters, and tuning is performed.
- Tuning without modal mass calculation and with unknown dynamic model: Tuning is performed simply assuming that the tuning frequency has to coincide with the chatter frequency.
- Off-line tuning with known dynamic model: The optimal tuning frequency of the damper depending on the position of the shafts of the machine is calculated by means of a prior dynamic analysis of the machine. The stiffness and the damping of the machine are continuously adjusted during the machining process depending on the position of the shafts of the machine.

Another innovative feature of this damper of the invention is the possibility of automatically identifying its own stiffness and damping. The vibration measured by the two accelerometers is processed during the machining process, and the stiffness and damping joining the inertial mass and the structure can be calculated from the ratio between these two measurements. This identification must be done outside the machine and requires specific equipment in a conventional semi-active damper.

A tuneable inertia damper with a simple, low-cost and robust solution, which because of its constructive and functional features is of preferred for the function which it is intended for, allowing the possibility of continuously adapting to the changes in machining conditions, for thus always ensuring an optimal operation is thus obtained.

### Description of the Drawings

Figure 1 shows a perspective view of the inertia damper for suppressing vibrations in a machine tool according to the object of the invention.
Figure 2 shows a horizontal cross-section perspective view of the inertia damper, where the inertial mass arranged inside is seen.
Figure 3 shows a vertical cross-section view of an embodiment of the magnets of the inertia damper.
Figure 4 shows another vertical cross-section view of another embodiment of the magnets of the inertia damper.
Figure 5 shows an elevational view of the inertia damper.
Figure 6 shows a view of an embodiment of the spring with variable stiffness of the inertia damper.
Figure 7 shows a schematic view of a possible embodiment of the elastic element arranged inside the inertial mass of the damper.
Figure 8 shows a perspective view of different areas of a machine tool in which the inertia damper can be arranged.
Figure 9 shows the flexibility reduction caused by the suitably tuned damper on the frequency response function of the original system.

### Detailed Description of the Invention

The essential operating principle of an inertia damper is the tuning between the vibration mode of the structure to dampen and the vibration mode of the damper, in both modal and frequency form.

In the machine tool sector, a damper which, joined with the structure of the machine tool, modifies the dynamics of one of its specific vibration modes, is added to prevent the chatter phenomenon. More specifically, the vibration mode which is self-excited in the chatter process is dampened. The vibration modes are somewhat intrinsic to the all structures. In certain machining conditions the process becomes unstable, a growing and unacceptable vibration associated with a vibration mode of the machine being produced. Chatter is an effect derived from the existence of these modes which appears in certain machining conditions. Damping must be added, either directly to the structure, which is complicated, or in a manner localised to the critical vibration mode, to prevent this. To that end, a tuned inertia damper can be added such that it adds damping to that specific mode. The damper must be capable of self-tuning during machining to ensure optimal behaviour.

The inertia damper for suppressing vibrations in a machine tool object of the invention has an outer casing (1) which is arranged fixed to the structure of the machine tool to dampen. A suspended inertial mass (2), the stiffness and damping of which can be independently controlled, is housed inside said outer casing (1), the stiffness and the damping of that inertial mass (2) thus being able to be adjusted for tuning the natural vibration frequency of the damper to the vibration mode frequency of the area of the machine tool to dampen.

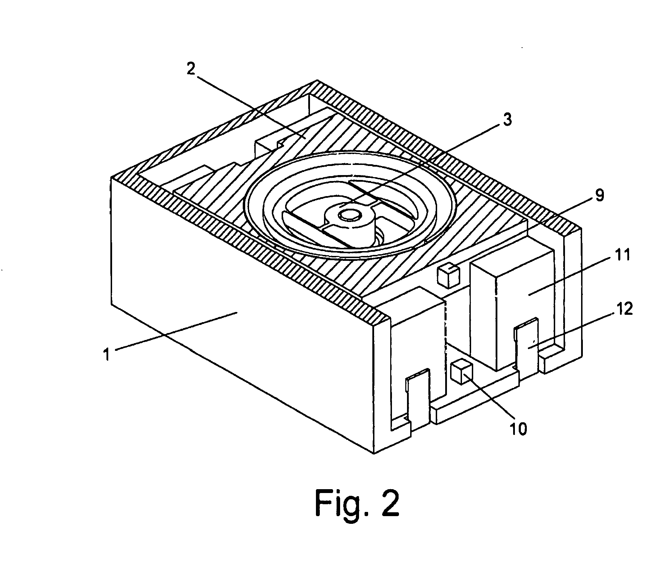

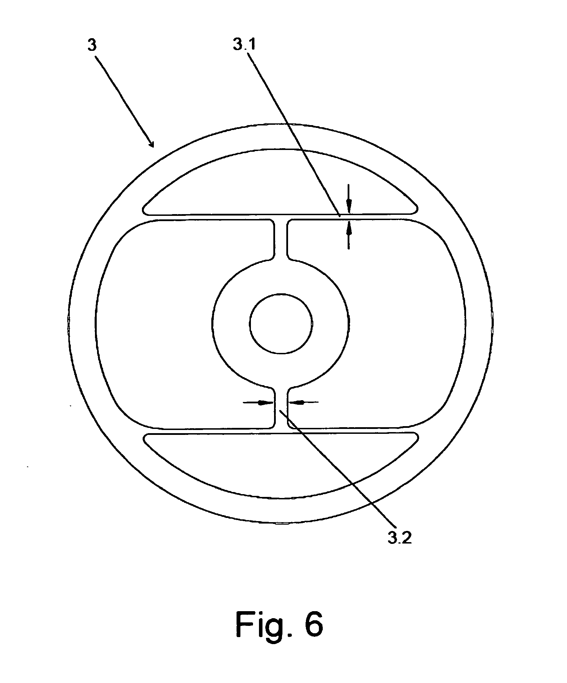

An elastic element (3) with adjustable stiffness, which is rotated by means of a motor (4), that motor (4) being associated with an encoder (5) which allows controlling the rotation thereof, is arranged inside the inertial mass (2). Therefore, the elastic element (3) is rotated to provide the inertia damper with the required stiffness by means of the controlled rotation of the motor (4). Figures 2 and 6 show a non-limiting embodiment of the elastic element (3) with adjustable stiffness, an H-shaped spring with transverse walls (3.1, 3.2) of different thickness in the case depicted in the figures, such that the stiffness of the inertial mass (2) and therefore of the entire damper can be adjusted depending on the angular position of the shaft of the motor (4) operating said spring.

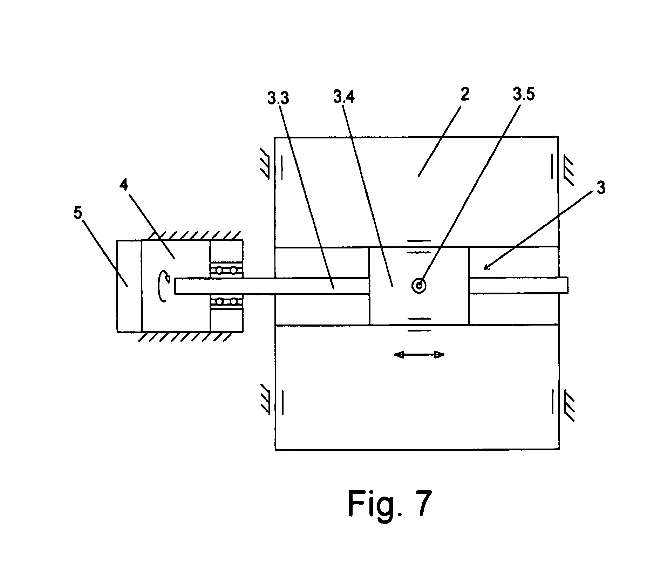

The elastic element (3) with adjustable stiffness can have other known configurations, such as for example, as seen in Figure 7, said elastic element (3) located inside the inertial mass (2) is formed by a cantilever beam (3.3) on which a carriage (3.4) slides. The supporting point (3.5) of the carriage (3.4) along the cantilever beam (3.3) is varied by means of the controlled rotation of the shaft of the motor (4), such that the variable support of the carriage (3.4) on the cantilever beam (3.3) allows adjusting the stiffness of the damper.

The carriage (3.4) would be moved along the cantilever beam (3.3) by means of a ball screw controlled by the rotation of the motor (4). In any case, the stiffness of the damper can be adjusted depending on the angular position of the shaft of the motor (4), controlled by the encoder (5) of the motor (4).

The damping of the inertial mass (2) and therefore of the inertia damper is achieved by means of eddy currents through a magnetic field. Pairs of magnets (6) are further arranged associated with the internal mass (2), a conducting plate (7) which is fixed to the outer casing (1) being located in the gap between each pair of magnets (6) but having no contact with one another, said conducting plate (7) preferably being made of copper,. The essential requirement for that plate is a low electric resistance for achieving greater currents and forces. Therefore, a magnetic field is generated between each pair of magnets (6) which, combined with the relative movement of these magnets (6) with respect to the conducting plate (7), provides linear damping to the inertia damper. The inertial mass (2) and the magnets (6) thus vibrate inside the outer casing (1), thereby reducing the amplitude of the mechanical vibrations produced in the machine tool due to chatter.

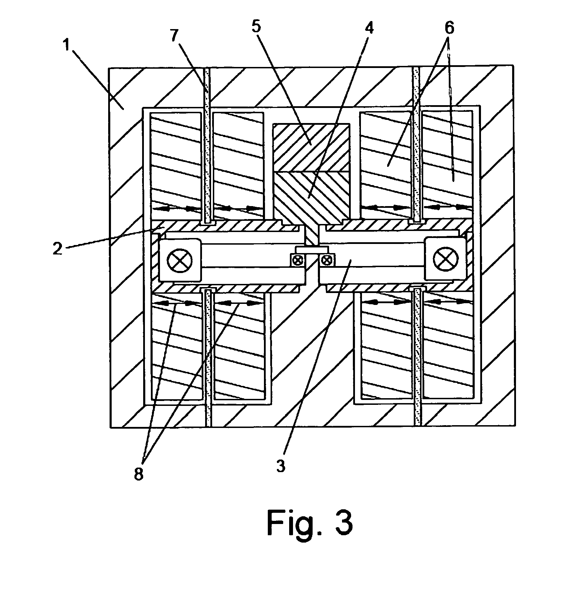

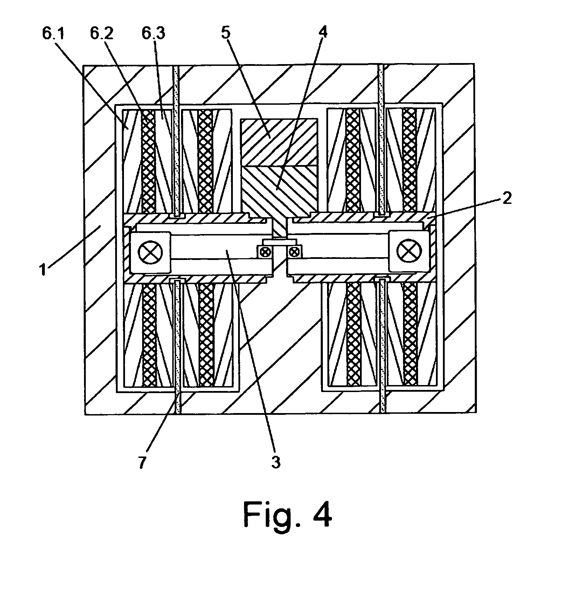

Two possible forms of controlling the damping generated by the magnetic field which is established between each pair of magnets (6) have been envisaged. In the embodiment shown in Figure 3, it has been envisaged that the magnets (6) have displacement means (8) for moving transversely with respect to the conducting plates (7), such that the damping magnetic field and, therefore, the damping are varied by varying the separation distance between the magnets (6). While in another embodiment shown in Figure 4, the magnetic field established between each pair of magnets (6) can be varied using a set of plates, thus each magnet (6) is formed by a first steel plate (6.1), a second steel plate including a winding (6.2) and a third magnetised plate (6.3), the third magnetised plate (6.3) being the closest to the conducting plate (7) and the first steel plate (6.1) being the farthest from the conducting plate (7).

Arranging two accelerometers (9, 10) which are integrated in the damper itself has been envisaged in order to be able to identify the frequency to dampen during the machining process. The first accelerometer (9) is arranged coupled to the inertial mass (2), while the second accelerometer (10) is coupled to the outer casing (1) which is fixed to the structure of the machine tool. The accelerometer (9) thus measures the vibration which is being produced in the inertial mass (2) and the accelerometer (10) measures the vibration which the machine tool is suffering.

Using the two accelerometers (9, 10) allows adding two functions to the damper, which are run continuously during the machining process, related to identifying the dynamic features of the damper itself and to calculating the optimal tuning frequency of the damper.

Identifying the dynamic features of the damper (variable with the position of the motor and with the magnetic field), and specifically the stiffness of the union between the inertial mass and the structure, and the damping generated by stray currents, can be performed in two ways.

In an already known first case, these parameters are identified before the machining process for different positions of the motor (4) and values of the magnetic field, requiring specific measuring equipment, and interpolation is performed to obtain a direct relationship between them which allows controlling stiffness and damping during the machining process.

In a second case, continuously performing this identification during the machining process by means of processing the information received from the two accelerometers (9, 10), from which ratio the stiffness and damping of the damper can be calculated at all times, which prevents having to use added equipment, is proposed.

Identifying the optimal tuning frequency and adjusting the damper to it can be performed continuously during the machining process in the following alternative manners:

The signal of the accelerometer (10) installed in the structure of the damper can be continuously processed to detect the main vibration frequency of the machine during machining. If this frequency is not a whole multiple of the passing frequency of the tool, it is considered that chatter is being produced, and the frequency of the damper is adjusted to this main vibration frequency. If the frequency detected is a multiple of the passing frequency of the tool, it is considered that there is no chatter, and therefore the damper is not modified. This adjustment process is performed continuously during machining.

The signal of the two accelerometers (9, 10) of the damper can be processed to obtain the modal mass associated with the main vibration mode of the machine. This modal mass together with the already known dynamic parameters of the damper and the vibration chatter frequency detected in the same manner as in the preceding case, allow calculating the optimal tuning frequency of the damper, to which the latter will be adjusted by varying its stiffness by means of the motor (4).

The optimal tuning frequency of the damper is usually calculated by means of dynamic machine and process analysis prior to the machining process. Said frequency can be calculated at different positions of said shafts since the optimal frequency is generally variable with the position of the shafts of the machine. The damper presented herein can continuously detect the position of the shafts of the machine, adapting the stiffness and damping by interpolating between the optimal tuning points identified in the prior dynamic analysis.

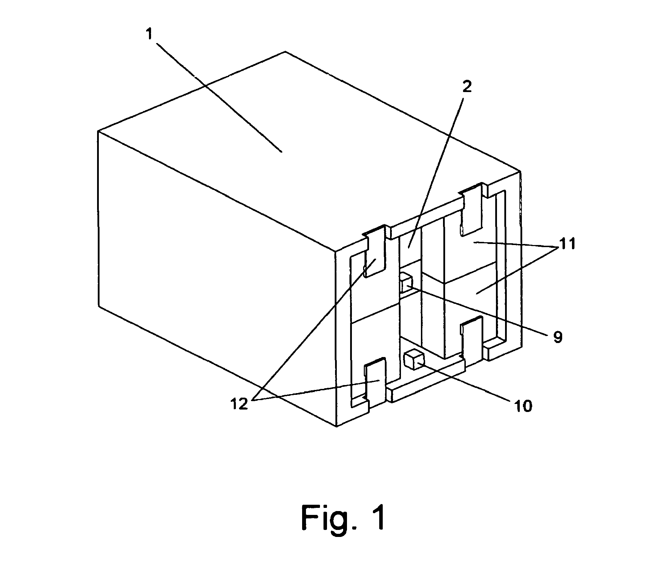

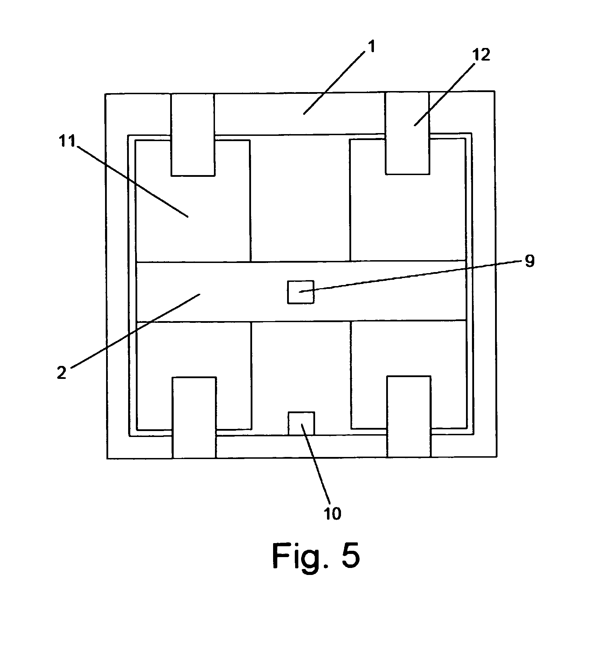

As shown in Figures 1, 3 and 5, the inertial mass (2) is guided inside the outer casing (1) by means of flexible elements (11), which are attached by means of respective anchors (12) to the outer casing (1) of the inertia damper. These flexible elements (11) guide the inertial mass (2) allowing it to move in the main direction of the damper and providing stiffness in other directions, thus assuring that a single main vibration mode is generated, always aligned with the magnets and the conducting plate (7).

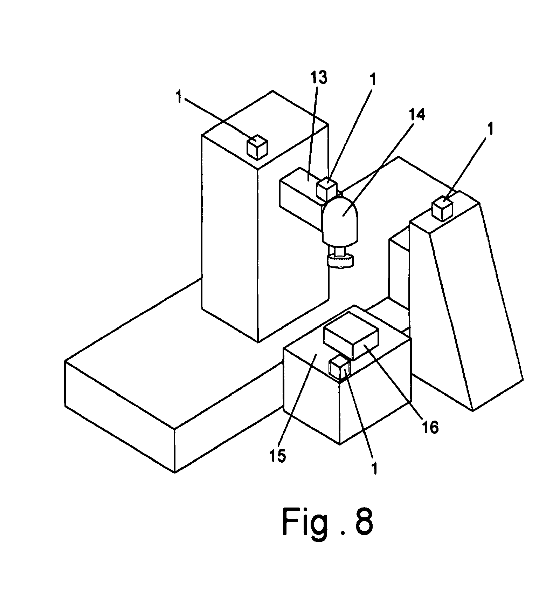

Figure 8 shows an example of some of the possible areas of a machine tool where the inertia damper can be arranged. The depicted machine tool is a milling machine, the inertia damper being able to be arranged, for example, in the ram (13) of the machine, as close as possible to the milling head (14), on the bench (15) where the part (16) to machine is arranged, or generally where the vibration of the machine according to the critical mode has a greater amplitude since this reduces the movable mass necessary.

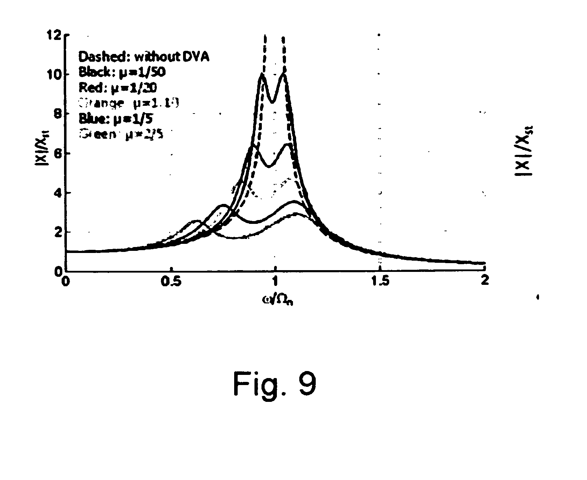

Figure 9 shows a graph with different flexibility reduction curves which the suitably tuned damper produces in the frequency response function of the original system.

## Claims

1. An inertia damper for suppressing vibrations in a machine tool, comprising an outer casing (1) which can be fixed to the structure of the machine tool to dampen, a suspended inertial mass (2) being housed inside said outer casing (1) the stiffness and damping of which are tuned based on the vibration frequency of the structure of the machine tool to dampen, pairs of magnets (6) arranged associated with the inertial mass (2), the magnets (6) of each pair being separated from one another by means of an electrical conducting plate (7) which is fixed to the outer casing (1) and which does not establish mechanical contact with the magnets (6), such that a magnetic field generating damping with respect to the electrical conducting plate (7) is generated between the magnets (6) of each pair; **characterised in that** an elastic element (3) which is rotated by a motor (4) associated with an encoder (5) is arranged inside the inertial mass (2), the stiffness of the inertial mass (2) being controlled by means of varying the angular position of the shaft of the motor (4); and **in that** a first accelerometer (10) is located in the outer casing (1) and a second accelerometer (9) is located in the movable inertial mass (2).

2. The inertia damper for suppressing vibrations in a machine tool according to claim 1, **characterised in that** the elastic element (3) arranged inside the inertial mass (2) is an H-shaped spring with two transverse walls (3.1, 3.2) of different thickness.

3. The inertia damper for suppressing vibrations in a machine tool according to claim 1, **characterised in that** the magnets (6) associated with the inertial mass (2) have displacement means (8) for moving transversely with respect to the electrical conducting plate (7) and varying the magnetic field which is established between them, and with it the damping.

4. The inertia damper for suppressing vibrations in a machine tool according to claim 1, **characterised in that** each magnet (6) is formed by a set of contiguous plates, comprising a first steel plate (6.1), a second steel plate (6.2) including a winding inside and a third magnetised plate (6.3), this third magnetised plate (6.3) being arranged contiguous to the electrical conducting plate (7), which allows varying the damping by means of varying the electric current in the winding of the steel plate (6.2).

5. The inertia damper for suppressing vibrations in a machine tool according to claim 1, **characterised in that** the electrical conducting plate (7) is made of copper.

6. The inertia damper for suppressing vibrations in a machine tool according to claim 1, **characterised in that** the elastic element (3) is formed by a cantilever beam (3.3) on which a carriage (3.4) slides, such that the stiffness of the inertial mass (2) is adjusted by means of moving the carriage (3.4) on the cantilever beam (3.3).

7. The inertia damper for suppressing vibrations in a machine tool according to claim 1, **characterised by** means for the processing of the signal of the two accelerometers (9,10) during the machining process for calculating the stiffness and actual dampening of the union between the inertial mass (2) and the structure of the machine tool.

8. The inertia damper for suppressing vibrations in a machine tool according to claim 1, **characterised by** means using the signal of the two accelerometers (9,10) for calculating the modal mass associated with the main vibration mode continuously during the machining process, and thus calculating the optimal frequency to tune the damper to by means of the motor (4) controlling the position of the elastic element (3).

9. The inertia damper for suppressing vibrations in a machine tool according to claim 1, **characterised by** means using the signal of the accelerometer (10) coupled to the outer casing (2) for continuously detecting the main vibration frequency of the machine during the machining process, evaluating whether or not it corresponds to a case of chatter, and, if so, this frequency is defined as the reference frequency for adjusting the stiffness of the elastic element (3) controlled by the motor (4).

10. The inertia damper for suppressing vibrations in a machine tool according to claim 1, **characterised by** means for varying the characteristic frequency of the damper depending on the position of the shafts of the machine during the machining process, according to a prior dynamic characterisation of the machine in which the optimal tuning frequency of the damper is calculated for each position of the shafts of the machine.

## Patentansprüche

1. Trägheitsdämpfer zur Unterdrückung von Vibrationen in einer Werkzeugmaschine, umfassend ein äußeres Gehäuse (1), das an der Struktur der zu dämpfenden Werkzeugmaschine befestigbar ist, eine in dem äußeren Gehäuse (1) untergebrachte hängende träge Masse (2), deren Steifigkeit und Dämpfung basierend auf der Vibrationsfrequenz der Struktur der zu dämpfenden Werkzeugmaschine abgestimmt werden, Paare von Magneten (6), die so angeordnet sind, dass sie der trägen Masse (2) zugeordnet sind, wobei die Magneten (6) jedes Paars voneinander mittels einer elektrisch leitenden Platte (7) getrennt sind, die an dem äußeren Gehäuse (1) befestigt ist und die keinen mechanischen Kontakt mit den Magneten (6) herstellt, sodass ein in Bezug auf die elektrisch leitende Platte (7) Dämpfung erzeugendes Magnetfeld zwischen den Magneten (6) jedes Paars erzeugt wird, **dadurch gekennzeichnet, dass** in der trägen Masse (2) ein elastisches Element (3) angeordnet ist, das von einem einem Codierer (5) zugeordneten Motor (4) gedreht wird, wobei die Steifigkeit der trägen Masse (2) mittels Veränderung der Winkelstellung der Welle des Motors (4) gesteuert wird; und dadurch, dass sich ein erster Beschleunigungsmesser (10) in dem äußeren Gehäuse (1) befindet und sich ein zweiter Beschleunigungsmesser (9) in der beweglichen trägen Masse (2) befindet.

2. Trägheitsdämpfer zur Unterdrückung von Vibrationen in einer Werkzeugmaschine nach Anspruch 1, **dadurch gekennzeichnet, dass** das in der trägen Masse (2) angeordnete elastische Element (3) eine H-förmige Feder mit zwei Querwänden (3.1., 3.2) unterschiedlicher Dicke ist.

3. Trägheitsdämpfer zur Unterdrückung von Vibrationen in einer Werkzeugmaschine nach Anspruch 1, **dadurch gekennzeichnet, dass** die der trägen Masse (2) zugeordneten Magneten (6) Verschiebemittel (8) zum Bewegen quer zu der elektrisch leitenden Platte (7) und Verändern des zwischen ihnen entstandenen Magnetfelds und somit der Dämpfung aufweisen.

4. Trägheitsdämpfer zur Unterdrückung von Vibrationen in einer Werkzeugmaschine nach Anspruch 1, **dadurch gekennzeichnet, dass** jeder Magnet (6) gebildet wird durch einen Satz aneinandergrenzender Platten, umfassend eine erste Stahlplatte (6.1), eine zweite Stahlplatte (6.2) mit einer Wicklung im Inneren und eine dritte magnetisierte Platte (6.3), wobei diese dritte magnetisierte Platte (6.3) so angeordnet ist, dass sie an die elektrisch leitende Platte (7) angrenzt, was eine Veränderung der Dämpfung mittels Veränderung des elektrischen Stroms in der Wicklung der Stahlplatte (6.2) erlaubt.

5. Trägheitsdämpfer zur Unterdrückung von Vibrationen in einer Werkzeugmaschine nach Anspruch 1, **dadurch gekennzeichnet, dass** die elektrisch leitende Platte (7) aus Kupfer gefertigt ist.

6. Trägheitsdämpfer zur Unterdrückung von Vibrationen in einer Werkzeugmaschine nach Anspruch 1, **dadurch gekennzeichnet, dass** das elastische Element (3) durch einen Auslegerbalken (3.3) gebildet wird, an dem ein Schlitten (3.4) gleitet, sodass die Steifigkeit der trägen Masse (2) mittels Bewegen des Schlittens (3.4) an dem Auslegerbalken (3.3) eingestellt wird.

7. Trägheitsdämpfer zur Unterdrückung von Vibrationen in einer Werkzeugmaschine nach Anspruch 1, **gekennzeichnet durch** Mittel zur Verarbeitung des Signals der beiden Beschleunigungsmesser (9, 10) während des Prozesses der maschinellen Bearbeitung zur Berechnung der Steifigkeit und tatsächlichen Dämpfung der Verbindung aus der trägen Masse und der Struktur der Werkzeugmaschine.

8. Trägheitsdämpfer zur Unterdrückung von Vibrationen in einer Werkzeugmaschine nach Anspruch 1, **gekennzeichnet durch** Mittel, die das Signal der beiden Beschleunigungsmesser (9, 10) zur kontinuierlichen Berechnung der mit der Hauptvibrationsmode verbundenen modalen Masse während des Prozesses der maschinellen Bearbeitung und somit zur Berechnung der optimalen Frequenz, auf die der Dämpfer mittels des die Position des elastischen Elements (3) steuernden Motors (4) abzustimmen ist, nutzen.

9. Trägheitsdämpfer zur Unterdrückung von Vibrationen in einer Werkzeugmaschine nach Anspruch 1, **gekennzeichnet durch** Mittel, die das Signal des an das äußere Gehäuse (2) gekoppelten Beschleunigungsmessers (10) nutzen, um kontinuierlich die Hauptvibrationsfrequenz der Maschine während des Prozesses der maschinellen Bearbeitung zu erfassen, zu beurteilen, ob diese einem Fall von Zittern entspricht oder nicht, und wenn ja, diese Frequenz als die Referenzfrequenz zum Einstellen der Steifigkeit des von dem Motor (4) gesteuerten elastischen Elements (3) definiert ist.

10. Trägheitsdämpfer zur Unterdrückung von Vibrationen bei einer Werkzeugmaschine nach Anspruch 1, **gekennzeichnet durch** Mittel zum Verändern der charakteristischen Frequenz des Dämpfers in Abhängigkeit von der Position der Wellen der Maschine während des Prozesses der maschinellen Bearbeitung entsprechend einer vorherigen dynamischen Charakterisierung der Maschine, bei der die optimale Abstimmfrequenz des Dämpfers für jede Position der Wellen der Maschine berechnet wird.

## Revendications

1. Amortisseur d'inertie pour supprimer des vibrations dans une machine-outil, comprenant un carter extérieur (1) qui peut être fixé à la structure de la machine-outil à amortir, une masse d'inertie suspendue (2) étant logée dans ledit carter extérieur (1), dont la rigidité et l'amortissement sont accordés sur la base de la fréquence de vibration de la structure de la machine-outil à amortir, des paires d'aimants (6) agencées en association avec la masse d'inertie (2), les aimants (6) de chaque paire étant séparés l'un de l'autre à l'aide d'une plaque de conduction électrique (7) qui est fixée au carter extérieur (1) et qui n'établit pas de contact mécanique avec les aimants (6), de sorte qu'un champ magnétique générant l'amortissement par rapport à la plaque de conduction électrique (7) soit généré entre les aimants (6) de chaque paire ; **caractérisé en ce qu'**un élément élastique (3) qui est tourné par un moteur (4) associé à un codeur (5) est agencé dans la masse d'inertie (2), la rigidité de la masse d'inertie (2) étant commandée par variation de la position angulaire de l'arbre du moteur (4) ; et **en ce qu'**un premier accéléromètre (10) est situé dans le carter extérieur (1) et un second accéléromètre (9) est situé dans la masse d'inertie mobile (2).

2. Amortisseur d'inertie pour supprimer des vibrations dans une machine-outil selon la revendication 1, **caractérisé en ce que** l'élément élastique (3) agencé dans la masse d'inertie (2) est un ressort en H avec deux parois transversales (3.1, 3.2) d'épaisseur différente.

3. Amortisseur d'inertie pour supprimer des vibrations dans une machine-outil selon la revendication 1, **caractérisé en ce que** les aimants (6) associés à la masse d'inertie (2) présentent des moyens de déplacement (8) pour se déplacer transversalement par rapport à la plaque de conduction électrique (7) et faire varier le champ magnétique qui est établi entre eux et avec lui l'amortissement.

4. Amortisseur d'inertie pour supprimer des vibrations dans une machine-outil selon la revendication 1, **caractérisé en ce que** chaque aimant (6) est formé par un ensemble de plaques contiguës, comprenant une première plaque d'acier (6.1), une deuxième plaque d'acier (6.2) incluant un enroulement à l'intérieur et une troisième plaque magnétisée (6.3), cette troisième plaque magnétisée (6.3) étant agencée de manière contiguë à la plaque de conduction électrique (7), ce qui permet la variation de l'amortissement en variant le courant électrique dans l'enroulement de la plaque d'acier (6.2).

5. Amortisseur d'inertie pour supprimer des vibrations dans une machine-outil selon la revendication 1, **caractérisé en ce que** la plaque de conduction électrique (7) est en cuivre.

6. Amortisseur d'inertie pour supprimer des vibrations dans une machine-outil selon la revendication 1, **caractérisé en ce que** l'élément élastique (3) est formé par une poutre en porte-à-faux (3.3), sur laquelle un chariot (3.4) glisse de sorte que la rigidité de la masse d'inertie (2) soit ajustée en déplaçant le chariot (3.4) sur la poutre en porte-à-faux (3.3).

7. Amortisseur d'inertie pour supprimer des vibrations dans une machine-outil selon la revendication 1, **caractérisé par** des moyens pour le traitement du signal des deux accéléromètres (9, 10) pendant le processus d'usinage pour calculer la rigidité et l'amortissement réel de l'union entre la masse d'inertie (2) et la structure de la machine-outil.

8. Amortisseur d'inertie pour supprimer des vibrations dans une machine-outil selon la revendication 1, **caractérisé par** des moyens utilisant le signal des deux accéléromètres (9, 10) pour calculer la masse modale associée au mode de vibration principal en continu pendant le processus d'usinage, et calculer ainsi la fréquence optimale pour accorder l'amortisseur à l'aide du moteur (4) commandant la position de l'élément élastique (3).

9. Amortisseur d'inertie pour supprimer des vibrations dans une machine-outil selon la revendication 1, **caractérisé par** des moyens utilisant le signal de l'accéléromètre (10) couplé au carter extérieur (2) pour détecter en continu la fréquence de vibration principale de la machine pendant le processus d'usinage, évaluer si elle correspond ou non à un cas de vibration, et, si oui, cette fréquence étant définie comme la fréquence de référence pour ajuster la rigidité de l'élément élastique (3) commandé par le moteur (4).

10. Amortisseur d'inertie pour supprimer des vibrations dans une machine-outil selon la revendication 1, **caractérisé par** des moyens pour faire varier la fréquence caractéristique de l'amortisseur selon la position des arbres de la machine pendant le processus d'usinage, selon une caractérisation dynamique antérieure de la machine, dans laquelle la fréquence d'accord optimale de l'amortisseur est calculée pour chaque position des arbres de la machine.
